# EUROPÄISCHE PATENTSCHRIFT

(11) **EP 1 684 046 B1**
(45) Veröffentlichungstag und Bekanntmachung des Hinweises auf die Patenterteilung: **25.06.2008**
(21) Anmeldenummer: 05001076.8
(22) Anmeldetag: 20.01.2005
(51) Int. Cl.: G01B 7/02

(54) **Verfahren und Einrichtung zum Bestimmen des Abstands zwischen einer Sensorelektrode und einem Werkstück**
Method and apparatus for measuring the distance between a sensor electrode and a workpiece
Procédé et dispositif de mesure de la distance entre une électrode de détection et une pièce à usiner

(43) Veröffentlichungstag der Anmeldung: 26.07.2006
(73) Patentinhaber: TRUMPF Werkzeugmaschinen GmbH + Co. KG, 71254 Ditzingen (DE)
(72) Erfinder: Hallasch, Dieter, 71254 Ditzingen (DE); Milich, Andreas, 71640 Ludwigsburg (DE)
(74) Vertreter: Kohler Schmid Möbus

(56) Entgegenhaltungen:
- DE-A1- 4 020 196
- DE-A1- 19 847 365
- DE-A1- 19 906 442
- DE-C1- 4 340 395

## Beschreibung

Die Erfindung betrifft ein Verfahren zum Bestimmen des Abstands zwischen einer Sensorelektrode und einem Werkstück einer Laserbearbeitungsmaschine, bei dem die Sensorelektrode mit dem Werkstück einen Messkondensator bildet, der Teil eines Schwingkreises ist, wobei aus einer erfassten Schwingkreisfrequenz der Abstand zwischen dem Werkstück und der Sensorelektrode ermittelt wird. Ein derartiges Verfahren ist beispielsweise aus der DE 43 40 395 C1 bekannt geworden.

Bei kapazitiven Abstands-Bestimmungseinrichtungen einer Laserbearbeitungsmaschine bilden beispielsweise die Schneiddüse und das zu schneidende Werkstück einen Kondensator. Dieser Kondensator ist in einen Schwingkreis geschaltet und die Kapazität des Kondensators bestimmt die Frequenz des Schwingkreises. Die Frequenz ist abhängig vom Abstand zwischen der Schneiddüse und dem Werkstück. Die Umrechnung der Frequenz in einen Abstand kann über eine Kennlinie erfolgen.

Tritt beim Laserschneiden ein Plasma auf, wirkt sich dieses wie ein parallel geschalteter ohmscher Widerstand zwischen der Schneiddüse und dem Werkstück aus. Dadurch entsteht im Schwingkreis eine Phasenverschiebung, welche eine Frequenzänderung und somit eine Änderung des Abstandsmesswertes zur Folge hat. Wird der Widerstand zu gering, führt dies zu einer verstärkten Dämpfung, die bis zum Aussetzen des Schwingkreises führen kann. Eine Abstandsmessung ist nicht mehr möglich.

Aus der DE 40 20 196 A1 ist ein kapazitives Abstandsmessverfahren bekannt, bei dem ein Messkondensator mit einem konstanten Wechselstrom gespeist wird, so dass die an der Sensorelektrode des Messkondensators abgegriffene Messspannung ausschließlich von der Impedanz des Messkondensators abhängt. Solange bei der Bearbeitung des Werkstücks kein Plasma zwischen der Sensorelektrode und dem Werkstück existiert, wird die Impedanz praktisch ausschließlich vom kapazitiven Widerstand des Messkondensators gebildet, so dass die Messspannung proportional zum Abstand zwischen Sensorelektrode und Werkstück ist. Tritt jedoch ein Plasma auf, so liegt parallel zur Kapazität des Messkondensators ein ohmscher Widerstand, der die Impedanz des Messkondensators beeinflusst. Das Plasma kann dabei zu einer derartigen Verkleinerung der Impedanz des Messkondensators führen, dass das Sensorsignal praktisch zusammenbricht und einer Regeleinrichtung ein zu kleiner Abstand vorgespiegelt wird. Bei diesem Verfahren ist es möglich, kurzzeitige Störungen durch ein Plasma auf elektronischem Wege auszublenden. Bei einem kontinuierlich anstehenden Plasma ist dies jedoch nicht möglich.

Um die durch ein Plasma entstehenden Probleme zu überwinden ist in der DE 199 06 442 A1 ein Verfahren zum Messen des Abstands zwischen einer Sensorelektrode und einem Werkstück beschrieben, bei dem vorgesehen ist, dass aus der Messspannung deren Realteil und deren Imaginärteil ermittelt werden, um den zu messenden Abstand d zu bestimmen und somit den störenden Einfluss eines sich zwischen Sensorelektrode und Werkstück bildenden Plasmas auf die Impedanz des Messkondensators zu beseitigen. Dies erfordert jedoch einen erheblichen Schaltungs- und Auswerteaufwand.

Aus der DE 43 40 395 C1 ist es bekannt, einen Schwingkreis zu bilden, in dem eine Induktivität in Reihe zu einer Messkapazität angeordnet wird und somit ein Schwingkreis ausgebildet wird. Der Schwingkreis wird mit einer Messfrequenz angeregt. Frequenzänderungen des Schwingkreises werden durch einen Frequenz-/Spannungswandler in eine Spannungsänderung transformiert, die direkt mit einer Kapazitätsänderung korreliert. Dadurch kann auch eine Änderung des Abstandes bestimmt werden. Es wird ein Zustandssignal erzeugt, das den Einfluss des bei der Laserbearbeitung entstehenden Plasmas beschreibt. Zu diesem Zweck wird am Schwingkreis ein Messsignal ausgekoppelt und einem Gleichrichter zugeführt. Die durch das Plasma im Gleichsignal erzeugten Hochfrequenzanteile werden durch einen Filter herausgefiltert und anschließend gleichgerichtet, um ein plasmabezogenes Störmesssignal zu erhalten, und mit einer vorgebbaren Schwelle verglichen, um ein Zustandssignal zu erhalten. Abhängig vom Zustandssignal kann vorgesehen sein, dass ein Laserstrahl relativ zum Werkstück erst nach Erzeugung eines Zustandssignals bewegt wird oder dass eine Bewegung des Laserstrahls relativ zum Werkstück nach Erzeugung des Zustandssignals gestoppt wird.

Aus der DE 198 47 365 A1 ist ein Verfahren zur Überwachung der Bearbeitung eines Werkstücks mittels eines aus einem Bearbeitungskopf austretenden Bearbeitungsstrahls, bei dem mittels eines LC-Generators, dessen Kapazität durch eine zwischen Bearbeitungskopf und Werkstück vorhandene Kapazität gebildet ist, ein Generator-Ausgangssignal erzeugt wird, dessen Amplitude zur Bildung eines Status-Signals auf das Auftreten einer vorbestimmten Änderung hin überwacht wird.

Um den Einfluss eines Plasmas zu minimieren bzw. auszuschließen, wurde in Betracht gezogen, spezielle Schneiddüsen zu entwickeln, beispielsweise Schneiddüsen, die aus zwei elektrisch isolierten Teilen bestehen, wobei der innere Teil, der durch das Plasma beeinflusst wird, nicht zur Abstandsmessung verwendet wird. Bei derartigen Düsen würde nur der äußere Teil der Schneiddüse zusammen mit dem Werkstück die Messkapazität bilden. Derartige Düsen sind jedoch relativ teuer.

Aufgabe der vorliegenden Erfindung ist es, ein Verfahren zur Abstandsbestimmung und eine Abstandbestimmungseinrichtung bereit zu stellen, mit denen eine zuverlässige und einfache Abstandsbestimmung auch bei anliegendem Plasma ermöglicht wird.

Gelöst wird diese Aufgabe durch ein Verfahren der eingangs genannten Art, bei dem die Bauelemente des Schwingkreises derart gewählt werden, dass der Schwingkreis eine Güte aufweist, bei der die Schwingfähigkeit des Schwingkreises bei einem sich zwischen Werkstück und Sensorelektrode einstellenden Plasma nicht oder unwesentlich beeinflusst wird, indem in dem Schwingkreis eine Spule mit einer Güte ≥ 80, vorzugsweise ≥ 100 verwendet wird. Wie bereits erwähnt, ist ein Hauptproblem beim Auftreten eines Plasmas, dass eine so hohe Dämpfung im Schwingkreis entsteht, dass dieser aussetzt. Dies bedeutet, dass keine Frequenz mehr gemessen werden kann und somit eine Abstandsbestimmung von vornherein unmöglich wird. Durch eine geeignete Wahl der Bauelemente des Schwingkreises kann der Schwingkreis jedoch eine so hohe Güte erlangen, dass ein Aussetzen des Schwingkreises nahezu unmöglich wird. Dies bedeutet, dass immer eine Schwingkreisfrequenz gemessen werden kann, die für eine Abstandsbestimmung herangezogen werden kann. Auf diese überraschend einfache Art und Weise ist eine Abstandsbestimmung stets möglich. Die im Stand der Technik beschriebenen aufwändigen Verfahren, insbesondere ein hoher schaltungstechnischer Aufwand oder die Ermittlung von Real- und Imaginärteil einer Messspannung, können vermieden werden. Außerdem kann eine Standardschneiddüse weiterhin verwendet werden. Mit dem erfindungsgemäßen Verfahren können insbesondere die bisher im Stand der Technik verwendeten einteiligen Düsen weiterhin eingesetzt werden.

Bei einer bevorzugten Verfahrensvariante kann vorgesehen sein, dass als Schwingkreis ein LC-Schwingkreis verwendet wird. Grundsätzlich ist es denkbar, die Güte des Schwingkreises zu erhöhen, indem die Messkapazität verändert wird. Da diese durch Schneiddüse, Werkstück und Medium zwischen Schneiddüse und Werkstück beeinflusst wird, ist das Verändern der Messkapazität nur beschränkt möglich. Die Verwendung einer Spule hat den Vorteil, dass diese maßgeblich die Güte des Schwingkreises beeinflusst und somit durch die Verwendung einer Spule mit einer hohen Güte die Güte des gesamten Schwingkreises auf einfache Art und Weise erhöht werden kann.

Vorteilhafterweise werden die Spule und der Messkondensator in Reihe geschaltet, so dass ein LC-Serienschwingkreis entsteht.

Bei einer bevorzugten Verfahrensvariante wird als Eigenfrequenz des Schwingkreises eine Frequenz f ≥ 18 MHz, insbesondere ≥ 20. MHz verwendet bzw. eingestellt. Die Einstellung kann durch geeignete Wahl der Induktivität der Spule erfolgen. Vorzugsweise wird eine geringere Induktivität gewählt als bisher im Stand der Technik üblich. Insbesondere bei Eigenfrequenzen über 20 MHz werden die plasmabedingten Abstandsmessfehler minimiert oder gänzlich vermieden.

Um die Abstandsbestimmung durchführen zu können ist es vorteilhaft, wenn die Schwingkreisfrequenz aus dem Schwingkreis ausgekoppelt wird und frequenzmoduliert, insbesondere auf die Versorgungsspannung einer Sensorelektronik aufmoduliert, an eine Auswerteeinrichtung übermittelt wird.

Bei einer bevorzugten Verfahrensvariante kann vorgesehen sein, dass der Widerstand des Mediums zwischen der Sensorelektrode und dem Werkstück bestimmt wird. Die Größe des elektrischen Widerstandes des Mediums zwischen der Sensorelektrode und dem Werkstück erlaubt einen Rückschluss auf die an der Schneidstelle erzielte Schnittqualität. Der elektrische Widerstand nimmt bei regulärem Schneidbetrieb, wenn der Laserstrahl das Werkstück problemlos durchdringt, verhältnismäßig große Werte an. Schwierigkeiten bei der Werkstückbearbeitung, insbesondere Probleme hinsichtlich der Beibehaltung der erforderlichen Schnitttiefe des Laserstrahls, sind begleitet von einer Verminderung des elektrischen Widerstandes gegenüber den bei regulärem Schneidbetrieb gemessenen Werten. Bei einer Messung verhältnismäßig niedriger Widerstandswerte kann über eine Einrichtung zur Steuerung der Parameter des Schneidvorganges beispielsweise die Schneidgeschwindigkeit, insbesondere die Vorschubgeschwindigkeit des Laserschneidkopfs relativ zum Werkstück, herabgesetzt werden. Alternativ oder ergänzend bietet sich unter anderem auch eine Variierung von Düsenabstand, Schneidgasdruck, Schneidgasmenge und/oder Laserstrahlleistung an. Die bereits erwähnte Auswerteeinrichtung berücksichtigt dabei zum einen das Messergebnis der Widerstandsmessung zur Ermittlung der Größe des elektrischen Widerstandes des Mediums zwischen Sensorelektrode und Werkstück. Zum anderen bezieht die Auswerteeinrichtung auch den zwischen der Sensorelektrode und dem Werkstück zum Zeitpunkt der Widerstandsmessung bestehenden Abstand ein. Auf diese Art und Weise wird eine Fehlsteuerung der Maschine ausgeschlossen. Die Abstandsmessung eröffnet die Möglichkeit der Überprüfung, ob beispielsweise ein mittels der Widerstandsmessung gemessener niedriger elektrischer Widerstandswert tatsächlich als Hinweis auf eine verminderte Schnittqualität anzusehen ist, oder ob dieser Widerstandswert darauf beruht, dass die Sensorelektrode, insbesondere der Laserschneidkopf, versehentlich mit vom Einstechvorgang verursachten Perlen oder Spangen oder mit Schlacke in Berührung gekommen ist und dadurch ein Kurzschluss erzeugt worden ist, infolgedessen der gemessene elektrische Widerstand ebenfalls einen niedrigen Wert einnimmt. Eine zur Vergrößerung der gemessenen Widerstandswerte führende Steuerung der Parameter des Schneidvorgangs wird lediglich in dem erstgenannten Fall veranlasst, in welchem der für das Medium zwischen Sensorelektrode und Werkstück gemessene elektrische Widerstand einen niedrigen Wert besitzt und der Abstand zwischen Sensorelektrode und Werkstück von Null verschieden ist.

In den Rahmen der Erfindung fällt auch eine Abstandsmesseinrichtung einer Laserbearbeitungsmaschine zur Bestimmung des Abstandes zwischen einer Sensorelektrode und einem Werkstück, bei der die Sensorelektrode mit dem Werkstück einen Messkondensator bildet, der Teil eines Schwingkreises ist, wobei aus einer erfassten Schwingkreisfrequenz der Abstand zwischen dem Werkstück und der Sensorelektrode ermittelt wird, wobei die Spule des Schwingkreises eine Güte ≥ 80, vorzugsweise ≥ 100 aufweist. Die Bauelemente des Schwingkreises sind dabei derart dimensioniert, dass der Schwingkreis eine Güte aufweist, bei der die Schwingfähigkeit des Schwingkreises bei einem sich zwischen Werkstück und Sensorelektrode einstellenden Plasma nicht oder unwesentlich beeinflusst wird. Ist die Güte des Schwingkreises hoch genug, kann trotz plasmabedingter Dämpfung stets ein Abstand ermittelt werden.

Da die Güte eines Schwingkreises besonders einfach beeinflusst werden kann, wenn dieser eine Spule aufweist, ist vorzugsweise vorgesehen, dass der Schwingkreis als LC-Serienschwingkreis ausgebildet ist.

Zusätzliche Bauelemente können eingespart werden, wenn als Sensorelektrode eine Schneiddüse, insbesondere eine Laserdüse eines Laserschneidkopfes vorgesehen ist. Durch diese Maßnahme wird insbesondere sicher gestellt, dass ein Plasma nur eine zu vernachlässigende Dämpfung des Schwingkreises bewirkt, so dass immer eine Schwingkreisfrequenz ermittelbar ist und der Schwingkreis nicht ausfällt.

Der Einfluss des Plasmas bei der Abstandsbestimmung kann minimiert werden, wenn der Schwingkreis eine Eigenfrequenz f ≥ 18 MHz, vorzugsweise f ≥ 20 MHz aufweist. Die Schwingkreisfrequenz kann durch eine Sensorelektronik erfasst werden.

Bei einer bevorzugten Ausgestaltung der Erfindung ist eine Auswerteeinrichtung vorgesehen, die mit der Sensorelektronik, insbesondere über ein abgeschirmtes Kabel verbunden ist. Die Auswerteeinrichtung weist dabei vorteilhafterweise eine Frequenzbestimmungseinrichtung, insbesondere einen digitalen Zähler auf. In der Auswerteeinrichtung kann somit ausgehend von der erfassten Schwingkreisfrequenz mit Hilfe einer Kennlinie der Abstand zwischen der Sensorelektrode und dem Werkstück ermittelt werden. Die Auswerteeinrichtung kann mit einer Steuerung in Verbindung stehen, die den Schneidvorgang der Laserbearbeitungsmaschine steuert. Der gemessene Abstand und ein eventuell durch eine zusätzliche Widerstandsmesseinrichtung zur Messung des Widerstands des Mediums zwischen Sensorelektrode und Werkstück gemessene Widerstand können von der Steuerung berücksichtigt werden, um entsprechende Parameter zur Steuerung des Schneidvorganges zu bestimmen.

Die Erfindung wird nachfolgend anhand der Zeichnung erläutert. Dabei zeigen:
- Fig. 1: stark schematisiert eine Abstandsbestimmungseinrichtung;
- Fig. 2: eine Darstellung einer Laserschneidmaschine; und
- Fig. 3: eine Schnittdarstellung durch einen Laserschneidkopf und ein Werkstück.

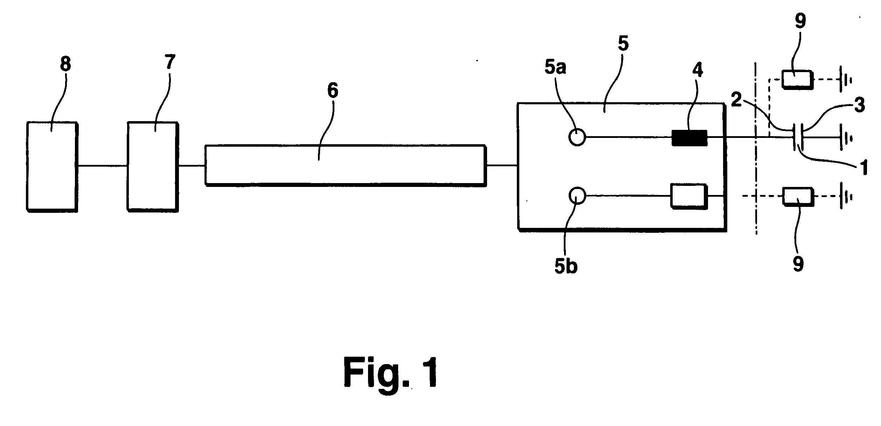

Die Fig. 1 zeigt einen Messkondensator 1, der durch eine Sensorelektrode 2 und ein Werkstück 3 gebildet ist. Die Sensorelektrode 2 kann dabei in der Nähe eines Laserschneidkopfes angeordnet sein. Insbesondere kann vorgesehen sein, dass die Sensorelektrode 2 die Laserdüse des Laserschneidkopfes ist. Der Messkondensator 1 ist in Reihe zu einer Spule 4 geschaltet, die in der Nähe der Laserdüse, insbesondere im Laserschneidkopf, angeordnet sein kann. Durch die Spule 4 und den Messkondensator 1 wird ein Serienschwingkreis gebildet. Weitere Elemente des Schwingkreises sind in der Sensorelektronik 5 enthalten. Die Sensorelektronik 5 wird über die Leitung 6 mit einer Spannung versorgt. Das Rauschen der Versorgungsspannung ist ausreichend, um den Schwingkreis anzuschwingen. Der Schwingkreis ist also selbstanschwingend. Die Anregung wird aus der Schwingung selbst durch rückgekoppelte Verstärkung erzeugt.

Durch eine Frequenzauskopplungseinrichtung 5a der Sensorelektronik 5 wird eine sich im Schwingkreis einstellende Schwingkreisfrequenz ausgekoppelt. Diese Frequenz wird auf die Versorgungsspannung aufmoduliert und über eine abgeschirmte Leitung 6, insbesondere ein Koaxialkabel, an eine Auswerteeinrichtung 7 übermittelt.

In der Auswerteeinrichtung 7 ist ein digitaler Zähler vorgesehen, der die Schwingkreisfrequenz bestimmt. Daraus kann anhand einer vorgegebenen oder vorher aufgenommenen Kennlinie der Abstand der Sensorelektrode 2 zu dem Werkstück 3 ermittelt werden. Aus dem Abstand werden in der Auswerteeinrichtung 7 Stellgrößen, wie z.B. ein Geschwindigkeitssollwert, bestimmt, die an die Steuerung 8 übergeben werden. Die Steuerung 8 sorgt beispielsweise dafür, dass die für den Abstand zwischen Werkstück 3 und Schneiddüse maßgebende Achse der Laserbearbeitungsmaschine bewegt wird.

Unter bestimmten Umständen, beispielsweise bei einer Richtungsänderung beim Laserschneiden, kann eine Plasmawolke zwischen dem Werkstück 3 und der Sensorelektrode 2 entstehen, so dass sich ein ohmscher Widerstand zwischen der Sensorelektrode 2 und dem Werkstück 3 ausbildet, was durch den Widerstand 9 angedeutet ist. Dieser Parallelwiderstand 9 führt zu einer Verstimmung des Schwingkreises. Dadurch entsteht eine höhere Dämpfung, was zu einem Aussetzen des Schwingkreises führen kann. Außerdem ändert sich die Phasenbedingung und die Frequenz, ohne dass sich der Abstand zwischen der Sensorelektrode 2 und dem Werkstück 3 geändert hat. Es kann jedoch eine Situation erzeugt werden, in der "durch das Plasma gesehen wird". Dies erfolgt, indem zum einen die Güte der Spule 4 erhöht wird, insbesondere auf eine Güte ≥ 100. Weiterhin wird eine Eigenfrequenz des Schwingkreises von mehr als 18 MHz eingestellt. Unter diesen Bedingungen ist die Auswirkung des plasmabedingten ohmschen Widerstandes 9 vernachlässigbar für die Abstandsbestimmung.

Die Sensorelektronik 5 weist weiterhin eine Widerstandsmesseinrichtung 5b auf, die anhand einer Gleichstrommessung einen Wert für den Plasmawiderstand 9, der nochmals eingezeichnet ist, durchführt. Auch die Widerstandsmesseinrichtung 5b ist über die abgeschirmte Leitung 6 mit der Auswerteeinrichtung 7 verbunden. Ein zusätzlicher Strombedarf aufgrund eines geringen ohmschen Widerstandes des Plasmawiderstands 9 bzw. ein verstärkter Strombedarf kann somit an die Auswerteeinheit 7 übermittelt werden.

Im Schneidbetrieb der Laserbearbeitungsmaschine wird über die Widerstandsmesseinrichtung 5b fortlaufend der elektrische Widerstand des Mediums zwischen der Sensorelektrode 2, insbesondere der Laserdüse, und dem Werkstück 3 bestimmt. Bei regulären Schneidbedingungen, unter denen mittels eines Laserstrahls in dem Werkstück 3 ein Trennschnitt mit der gewünschten Qualität hergestellt wird, nimmt der gemessene Widerstand einen etwa konstanten und gegen unendlich gehenden Wert an. Kommt es im Bereich der Schneidstelle, beispielsweise bei Kurvenfahrt des Laserschneidkopfes mit starker Kurvenkrümmung bei gegebenen Parametern des Schneidvorgangs, zu Schwierigkeiten bei der Aufrechterhaltung der erforderlichen Schnitttiefe des Laserstrahls, so vermindert sich gleichzeitig der mit Hilfe der Widerstandsmesseinrichtung 5b bestimmte elektrische Widerstand gegenüber dem Ausgangszustand erheblich. Diese Widerstandsverminderung bzw. der sich ergebende reduzierte Widerstandswert wird mittels der Auswerteeinrichtung 7 erfasst.

Gleichzeitig erfasst die Auswerteeinrichtung 7 den mittels des Schwingkreises und der Frequenzauskopplungseinrichtung 5a ermittelten Abstand von Sensorelektrode 2 und Werkstück 3. Ist der Abstand zwischen der Sensorelektrode 2 und dem Werkstück 3 von Null verschieden, ist also die Laserdüse von dem Werkstück 3 beabstandet und nimmt der mittels der Widerstandsmesseinrichtung 5b bestimmte elektrische Widerstand des Mediums zwischen der Sensorelektrode 2 und dem Werkstück 3 einen verhältnismäßig niedrigen Wert an, so kann dies je nach Prozess für die Auswerteeinrichtung 7 das Vorliegen von Bearbeitungsbedingungen indizieren, unter denen mit einer verminderten Schneidqualität zu rechnen ist, da der Laserstrahl das Werkstück 3 nicht mehr bzw. nicht mehr durchgängig entlang der Schnittlinie durchsetzt. Auf der Grundlage der gemessenen Widerstandswerte bzw. der Widerstandsveränderung erzeugt die Auswerteeinrichtung 7 Steuersignale für die Steuerung 8 zur Steuerung der Parameter des Schneidvorgangs, aufgrund derer die Steuerung 8 die Relativgeschwindigkeit von Laserschneidkopf und Werkstück 3 herabsetzt, bis der über die Widerstandsmesseinrichtung 5b bestimmte elektrische Widerstand Werte annimmt, die dem bei regulärem Schneidbetrieb gemessenen Wert entsprechen oder diesem Wert zumindest eng benachbart sind.

Auf die beschriebene Art und Weise werden die Parameter des Schneidvorganges derart eingestellt, dass an der Schneidstelle stets Bearbeitungsverhältnisse herrschen, die einen optimalen Bearbeitungserfolg gewährleisten.

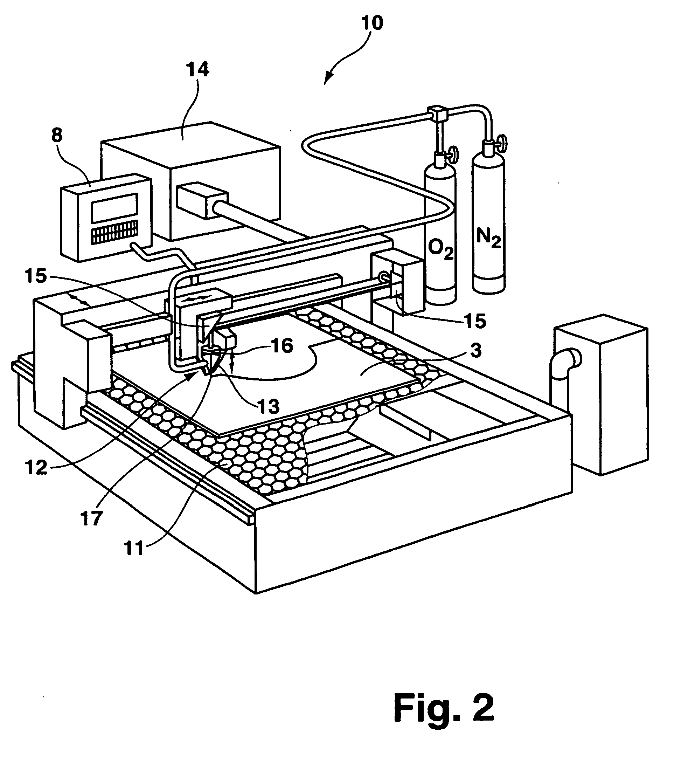

Die Fig. 2 zeigt beispielhaft eine perspektivische Ansicht einer Laserbearbeitungsmaschine 10, die im Ausführungsbeispiel als Laserflachbettmaschine ausgebildet ist. Das erfindungsgemäße Konzept ist grundsätzlich bei jeder Laserbearbeitungsmaschine anwendbar. Ein Werkstück 3 liegt auf einer Werkstückauflage 11 auf. Das Werkstück 3 kann über einen Laserschneidkopf 12, der eine Laserdüse 13 aufweist, bearbeitet werden. Es ist eine Steuerung 8 zur Steuerung des Laserschneidvorganges vorgesehen. Die Steuerung 8 steht mit einer nicht gezeigten Antriebseinheit 14 zur Bewegung des Laserschneidkopfes 12 entlang der verschiedenen Maschinenachsen in Verbindung. Der Laserstrahl wird vom Laserresonator 14 über Umlenkspiegel 15 durch eine Linse 16 zur Bearbeitungsstelle 17 geführt.

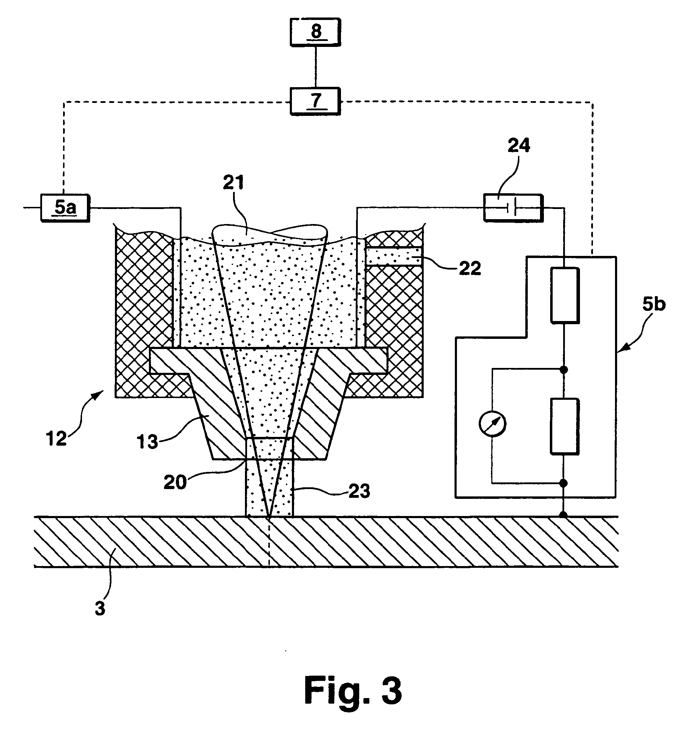

Die Fig. 3 zeigt einen Laserschneidkopf 12 mit einer aus einem elektrisch leitenden Werkstoff gefertigten Laserdüse 13, die gegenüber weiteren Teilen des Laserschneidkopfs 12 elektrisch isoliert angebracht ist. An einer Düsenmündung 20 tritt aus dem Laserschneidkopf 12 ein Laserstrahl 21 aus, der dem Laserschneidkopf 12 gegenüberliegend auf ein Werkstück 3 in Form eines elektrisch leitenden Blechs trifft, um dieses, wie gestrichelt angedeutet, unter schneidender Bearbeitung zu durchdringen. Über eine Gaszuführung 22 wird Schneidgas, im dargestellten Beispielsfall Stickstoff, in den Laserschneidkopf 12 aufgegeben. Ein Schneidgasstrahl 23 tritt ebenfalls über die Düsenmündung 20 aus dem Inneren des Laserschneidkopfs 12 in Richtung auf das Werkstück 3 aus. Während der schneidenden Bearbeitung wird das Werkstück 3 ortsfest gehalten, der Laserschneidkopf 12 relativ zu dem Werkstück 3 von diesem beabstandet und parallel zu diesem verschoben.

Eine Spannungsquelle 24 ist einerseits mit der Laserdüse 13 und andererseits mit dem Werkstück 3 leitend verbunden. Dabei ist zwischen die Spannungsquelle 24 und das Werkstück 3 eine Widerstandsmesseinrichtung 5b geschaltet. Im weiteren Sinne sind auch die Laserdüse 13, die Spannungsquelle 24 und das Werkstück 3 Bestandteile der Widerstandsmesseinrichtung 5b. Die Frequenzauskopplungseinrichtung 5a ist ebenfalls mit der Laserdüse 13 verbunden.

Wie in der Abbildung gestrichelt angedeutet, stehen sowohl die Widerstandsmesseinrichtung 5b als auch die Frequenzauskopplungseinrichtung 5a mit einer rechnergestützten Auswerteeinrichtung 7 in Verbindung. Diese wiederum ist mit einer Steuerung 8 der Parameter des Schneidvorgangs, sprich: mit der Maschinensteuerung, gekoppelt.

## Patentansprüche

1. Verfahren zum Bestimmen des Abstands zwischen einer Sensorelektrode (2) und einem Werkstück (3) einer Laserbearbeitungsmaschine, bei dem die Sensorelektrode (2) mit dem Werkstück (3) einen Messkondensator (1) bildet, der Teil eines Schwingkreises ist, wobei aus einer erfassten Schwingkreisfrequenz der Abstand zwischen dem Werkstück (3) und der Sensorelektrode (2) ermittelt wird, **dadurch gekennzeichnet, dass** die Bauelemente des Schwingkreises derart gewählt werden, dass der Schwingkreis eine Güte aufweist, bei der die Schwingfähigkeit des Schwingkreises bei einem sich zwischen Werkstück (3) und Sensorelektrode (2) einstellenden Plasma nicht oder unwesentlich beeinflusst wird, indem in dem Schwingkreis eine Spule (4) mit einer Güte ≥ 80, vorzugsweise ≥ 100 verwendet wird.

2. Verfahren nach Anspruch 1, **dadurch gekennzeichnet, dass** als Schwingkreis ein LC - Schwingkreis verwendet wird.

3. Verfahren nach einem der vorhergehenden Ansprüche, **dadurch gekennzeichnet, dass** die Spule (4) und der Messkondensator (1) in Reihe geschaltet werden.

4. Verfahren nach einem der vorhergehenden Ansprüche, **dadurch gekennzeichnet, dass** als Eigenfrequenz des Schwingkreises eine Frequenz f ≥ 18 MHz, vorzugsweise f ≥ 20 MHz verwendet wird.

5. Verfahren nach einem der vorhergehenden Ansprüche, **dadurch gekennzeichnet, dass** die Schwingkreisfrequenz aus dem Schwingkreis ausgekoppelt wird und frequenzmoduliert, insbesondere auf die Versorgungsspannung einer Sensorelektronik (5) aufmoduliert, an eine Auswerteeinrichtung (7) übermittelt wird.

6. Verfahren nach einem der vorhergehenden Ansprüche, **dadurch gekennzeichnet, dass** der ohmsche Widerstand (9) des Mediums zwischen der Sensorelektrode (2) und dem Werkstück (3) bestimmt wird.

7. Abstandsmesseinrichtung einer Laserbearbeitungsmaschine zur Bestimmung des Abstands zwischen einer Sensorelektrode (2) und einem Werkstück (3), insbesondere zur Durchführung des Verfahrens nach einem der vorhergehenden Ansprüche, bei der die Sensorelektrode (2) mit dem Werkstück (3) einen Messkondensator (1) bildet, der Teil eines Schwingkreises ist, wobei aus einer erfassten Schwingkreisfrequenz der Abstand zwischen dem Werkstück (3) und der Sensorelektrode (2) ermittelt wird, **dadurch gekennzeichnet, dass** die Bauelemente des Schwingkreises derart dimensioniert sind, dass der Schwingkreis eine Güte aufweist, bei der die Schwingfähigkeit des Schwingkreises bei einem sich zwischen Werkstück (3) und Sensorelektrode (2) einstellenden Plasma nicht oder unwesentlich beeinflusst wird, wobei die Spule (4) des Schwingkreises eine Güte ≥ 80, vorzugsweise ≥ 100 aufweist.

8. Abstandsmesseinrichtung nach Anspruch 7, **dadurch gekennzeichnet, dass** der Schwingkreis als LC-Serienschwingkreis ausgebildet ist.

9. Abstandsmesseinrichtung nach Anspruch 7 oder 8, **dadurch gekennzeichnet, dass** als Sensorelektrode (2) eine Schneiddüse vorgesehen ist.

10. Abstandsmesseinrichtung nach einem der vorhergehenden Ansprüche 7 bis 9, **dadurch gekennzeichnet, dass** der Schwingkreis eine Eigenfrequenz f ≥ 18 MHz, vorzugsweise f ≥ 20 MHz aufweist.

11. Abstandsmesseinrichtung nach einem der vorhergehenden Ansprüche 7 bis 10, **dadurch gekennzeichnet, dass** eine Sensorelektronik zur Erfassung der Schwingkreisfrequenz vorgesehen ist.

12. Abstandsmesseinrichtung nach einem der vorhergehenden Ansprüche 7 bis 11, **dadurch gekennzeichnet, dass** eine Auswerteeinrichtung (7) vorgesehen ist, die mit der Sensorelektronik (5) insbesondere über ein abgeschirmtes Kabel, verbunden ist.

13. Laserschneidmaschine mit einer Abstandsmesseinrichtung nach einem der vorhergehenden Ansprüche 7 bis 12.

## Claims

1. Method for determining the distance between a sensor electrode (2) and a workpiece (3) of a laser machine tool, in which the sensor electrode (2) forms with the workpiece (3) a measuring capacitor (1), which is part of an oscillating circuit, wherein the distance between the workpiece (3) and the sensor electrode (2) is determined from a detected oscillating circuit frequency, **characterised in that** the components of the oscillating circuit are selected in such a way that the oscillating circuit has a quality with which the oscillating ability of the oscillating circuit is not or is negligibly affected on development of a plasma between workpiece (3) and sensor electrode (2), by using a coil (4) having a quality of ≥ 80, preferably ≥ 100 in the oscillating circuit.

2. Method according to claim 1, **characterised in that** an LC- oscillator is used as the oscillating circuit.

3. Method according to any one of the preceding claims, **characterised in that** the coil (4) and the measuring capacitor (1) are connected in series.

4. Method according to any one of the preceding claims, **characterised in that** a frequency f ≥ 18 Mz, preferably f ≥ 20 MHz, is used as the natural frequency of the oscillating circuit.

5. Method according to any one of the preceding claims, **characterised in that** the oscillating circuit frequency is decoupled from the oscillating circuit and is forwarded frequency-modulated, in particular modulated onto the supply voltage of sensor electronics (5), to an evaluating device (7).

6. Method according to any one of the preceding claims, **characterised in that** the ohmic resistance (9) of the medium between the sensor electrode (2) and the workpiece (3) is determined.

7. Distance-measuring device of a laser machine tool for determining the distance between a sensor electrode (2) and a workpiece (3), in particular for implementing the method according to any one of the preceding claims, in which the sensor electrode (2) forms with the workpiece (3) a measuring capacitor (1), which is part of an oscillating circuit, wherein the distance between the workpiece (3) and the sensor electrode (2) is determined from a detected oscillating circuit frequency, **characterised in that** the components of the oscillating circuit are dimensioned in such a manner that the oscillating circuit has a quality with which the ability of the oscillating circuit to oscillate on development of a plasma between workpiece (3) and sensor electrode (2) is not or is negligibly affected, wherein the coil (4) of the oscillating circuit has a quality of ≥ 80, preferably ≥ 100.

8. Distance-measuring device according to claim 7, **characterised in that** the oscillating circuit is in the form of an LC series oscillating circuit.

9. Distance-measuring device according to claim 7 or 8, **characterised in that** a cutting nozzle is provided as the sensor electrode (2).

10. Distance-measuring device according to any one of the preceding claims 7 to 9, **characterised in that** the oscillating circuit has a natural frequency f ≥ 18 MHz, preferably f ≥ 20 MHz.

11. Distance-measuring device according to any one of the preceding claims 7 to 10, **characterised in that** sensor electronics for detecting the oscillating circuit frequency are provided.

12. Distance-measuring device according to any one of the preceding claims 7 to 11, **characterised in that** an evaluating device (7) is provided, which is connected to the sensor electronics (5) in particular via a shielded cable.

13. Laser cutting machine having a distance-measuring device according to any one of the preceding claims 7 to 12.

## Revendications

1. Procédé pour déterminer la distance entre une électrode de détection (2) et une pièce à usiner (3) d'une machine d'usinage au laser, dans lequel l'électrode de détection (2) forme avec la pièce à usiner (3) un condensateur de mesure (1) qui fait partie d'un circuit oscillant, la distance entre la pièce à usiner (3) et l'électrode de détection (2) étant déterminée à partir d'une fréquence saisie du circuit oscillant, **caractérisé en ce que** les composants du circuit oscillant sont choisis de façon que le circuit oscillant présente un facteur de qualité avec lequel la capacité à osciller du circuit oscillant n'est pas ou peu influencée par un plasma se formant entre pièce à usiner (3) et électrode de détection (2) du fait que l'on utilise dans le circuit oscillant une bobine (4) ayant un facteur de qualité ≥ 80, de préférence ≥ 100.

2. Procédé selon la revendication 1, **caractérisé en ce que** l'on utilise un circuit oscillant LC comme circuit oscillant.

3. Procédé selon l'une des revendications précédentes, **caractérisé en ce que** la bobine (4) et le condensateur de mesure (1) sont branchés en série.

4. Procédé selon l'une des revendications précédentes, **caractérisé en ce que** l'on utilise une fréquence f ≥ 18 MHz, de préférence f ≥ 20 MHz, comme fréquence propre du circuit oscillant.

5. Procédé selon l'une des revendications précédentes, **caractérisé en ce que** la fréquence de circuit oscillant est découplée du circuit oscillant et transmise à un dispositif d'évaluation (7) en étant modulée en fréquence, en particulier modulée sur la tension d'alimentation d'une électronique de détection (5).

6. Procédé selon l'une des revendications précédentes, **caractérisé en ce que** l'on détermine la résistance ohmique (9) du milieu entre l'électrode de détection (2) et la pièce à usiner (3).

7. Dispositif de mesure de distance d'une machine d'usinage au laser, pour déterminer la distance entre une électrode de détection (2) et une pièce à usiner (3), en particulier pour réaliser le procédé selon l'une des revendications précédentes, dans lequel l'électrode de détection (2) forme avec la pièce à usiner (3) un condensateur de mesure (1) qui fait partie d'un circuit oscillant, la distance entre la pièce à usiner (3) et l'électrode de détection (2) étant déterminée à partir d'une fréquence saisie du circuit oscillant, **caractérisé en ce que** les composants du circuit oscillant sont dimensionnés de façon que le circuit oscillant présente un facteur de qualité avec lequel la capacité à osciller du circuit oscillant n'est pas ou peu influencée par un plasma se formant entre pièce à usiner (3) et électrode de détection (2), la bobine (4) du circuit oscillant présentant un facteur de qualité ≥ 80, de préférence ≥ 100.

8. Dispositif de mesure de distance selon la revendication 7, **caractérisé en ce que** le circuit oscillant est réalisé sous forme de circuit oscillant série LC.

9. Dispositif de mesure de distance selon la revendication 7 ou 8, **caractérisé en ce qu'**il est prévu une buse de coupe comme électrode de détection (2).

10. Dispositif de mesure de distance selon l'une des revendications 7 à 9 précédentes, **caractérisé en ce que** le circuit oscillant présente une fréquence propre f ≥ 18 MHz, de préférence f ≥ 20 MHz.

11. Dispositif de mesure de distance selon l'une des revendications 7 à 10 précédentes, **caractérisé en ce qu'**il est prévu une électronique de détection pour saisir la fréquence de circuit oscillant.

12. Dispositif de mesure de distance selon l'une des revendications 7 à 11 précédentes, **caractérisé en ce qu'**il est prévu un dispositif d'évaluation (7) qui est relié à l'électronique de détection (5) en particulier par un câble blindé.

13. Machine d'usinage au laser avec un dispositif de mesure de distance selon l'une des revendications 7 à 12 précédentes.
